# FASCICULE DE BREVET EUROPEEN

(11) **EP 2 202 918 B1**
(45) Date de publication et mention de la délivrance du brevet: **17.06.2015**
(21) Numéro de dépôt: 09178682.2
(22) Date de dépôt: 10.12.2009
(51) Int. Cl.: H04L 12/26, H04L 29/12

(54) **Procédé et dispositif de communication par virtualisation des adresses pour la simulation d'intégration de composants**
Kommunikationsverfahren und -vorrichtung durch Virtualisierung von Adressen für die Simulation der Integration von Komponenten
Method and device for communicating addresses by virtualisation for the simulation of component integration

(30) Priorité: 10.12.2008 FR 0858445
(43) Date de publication de la demande: 30.06.2010
(73) Titulaire: Airbus Operations, 31060 Toulouse (FR)
(72) Inventeur: Dessertenne, Franck, 31770, COLOMIERS (FR); Copin, Jean-François, 31000, TOULOUSE (FR)
(74) Mandataire: Santarelli

(56) Documents cités:
- EP-A- 1 294 132
- EP-A1- 1 758 005
- WO-A-01/37492
- WO-A-01/45348
- US-A1- 2006 109 845
- US-A1- 2006 112 186
- US-A1- 2007 173 959
- US-A1- 2008 294 915
- US-B1- 6 574 681

## Description

La présente invention concerne la simulation d'intégration de composants et plus particulièrement un procédé et un dispositif d'échange de messages de test par virtualisation des adresses dans un réseau de communication comprenant des équipements pourvus de cartes d'extension.

La simulation de l'intégration de composants dans un véhicule, en particulier dans un aéronef, est notamment utilisée pour assurer le développement et l'intégration des systèmes électroniques et/ou informatiques embarqués dans celui-ci.

Ainsi, l'intégration de composants dans des véhicules fait l'objet de simulations selon lesquelles des dispositifs d'entrée/sortie, ou cartes d'entrée/sortie, sont utilisés comme interface entre les composants réels du véhicule, tels que, par exemple, des calculateurs, des capteurs et des actionneurs, et un environnement de simulation comprenant généralement un ou plusieurs ordinateurs utilisés pour simuler le comportement du véhicule ou d'une partie de celui-ci. Chaque carte d'entrée/sortie dispose d'un nombre déterminé de voies d'entrée et de voies de sortie.

La complexité de l'environnement de simulation est liée à celle de l'ensemble des composants du véhicule mis en oeuvre. Dans le domaine des aéronefs, il est généralement nécessaire de faire appel à plusieurs ordinateurs ou serveurs pour simuler les différentes situations auxquelles les composants sont susceptibles d'avoir à faire face. Un réseau, permettant la communication entre les différents ordinateurs ou serveurs et les dispositifs électroniques d'entrée/sortie, est généralement utilisé.

Le réseau ainsi formé est, par exemple, du type « *switch fabric* », basé sur une architecture commutée, c'est-à-dire que les équipements terminaux chargés de l'émission et de la réception des données s'organisent autour des commutateurs chargés du transport de ces données. Le commutateur est chargé d'émettre en parallèle des requêtes en provenance des ordinateurs ou des serveurs à destination des cartes d'entrée/sortie et des réponses en provenance des cartes d'entrée/sortie vers les ordinateurs ou les serveurs. Une même requête et une même réponse doivent pouvoir être adressées par le commutateur à plusieurs destinataires.

Le réseau utilisé peut être basé sur un standard existant, par exemple le standard Ethernet (IEEE 802.3) qui décrit un protocole de réseau local à commutation de paquets.

En raison du nombre de composants mis en oeuvre dans la simulation, il est généralement nécessaire d'utiliser de nombreuses cartes d'entrée/sortie. Celles-ci peuvent être regroupées dans un ou plusieurs équipements comprenant une unité de calcul, généralement utilisée comme interface unique de communication. Un tel équipement, aussi appelé *rack* en terminologie anglo-saxonne, comprend typiquement un bus de communication industriel, appelé bus industriel dans la suite de la description, auquel sont reliées l'unité de calcul, comprenant une interface réseau unique, et une pluralité de cartes d'entrée/sortie, elles-mêmes connectées aux composants dont l'intégration est simulée.

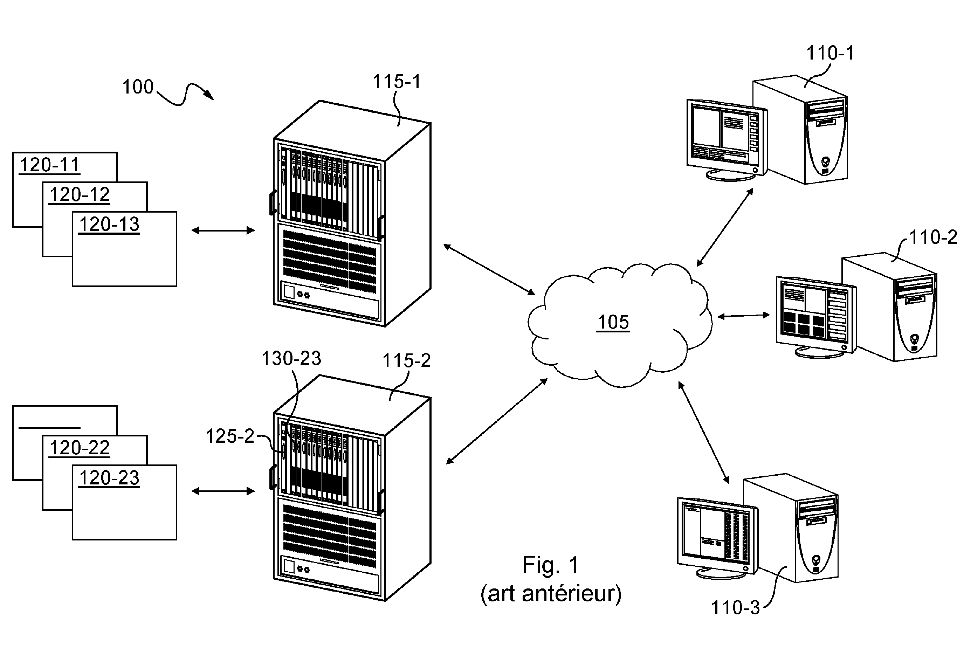

La figure 1 illustre un exemple d'environnement pouvant être utilisé pour simuler l'intégration de composants dans un aéronef. L'environnement 100 comprend ici un réseau 105 auquel sont connecté les ordinateurs ou serveurs 110-1 à 110-3, génériquement appelés ordinateurs dans la suite de la description, ainsi que les équipements 115-1 et 115-2 comprenant les cartes d'entrée/sortie. Les composants dont l'intégration est simulée sont ici les composants 120-11 à 120-13 et 120-21 à 120-23, génériquement référencés 120, reliés aux équipements 115-1 et 115-2, respectivement.

A titre d'illustration, l'équipement 115-2 comprend ici une unité de calcul 125-2, aussi appelée CPU (sigle de *Central Processing Unit* en terminologie anglo-saxonne), ainsi que 12 cartes d'entrée/sortie, dont la carte d'entrée/sortie 130-23.

Les outils de test et de simulation de l'intégration des composants 120 sont implémentés sur les ordinateurs 110-1 à 110-3, chaque ordinateur pouvant implémenter un ou plusieurs outils.

Pour tester l'intégration d'un ou de plusieurs composants 120, un opérateur utilise un outil de test implémenté sur l'un des ordinateurs 110-1 à 110-3 pour transmettre des données à un ou plusieurs composants 120 sous forme de requêtes adressées à une ou plusieurs cartes d'entrée/sortie via l'un des équipements 115-1 et 115-2. Les résultats de test, obtenus sous forme de réponses aux requêtes, sont analysés par l'opérateur qui vérifie ainsi le déroulement de la simulation.

Cependant, si le réseau de communication 105 utilisé est un réseau standard, par exemple de type Ethernet, les équipements 115-1 et 115-2 utilisent généralement des bus industriels spécifiques, par exemple des bus de type VME ou PCI (sigle de *Peripheral Component Interconnect* en terminologie anglo-saxonne) pour relier les cartes d'entrée/sortie à l'unité de calcul.

Ainsi, pour échanger des données entre un ordinateur et une carte d'entrée/sortie, il est nécessaire de prendre en compte le protocole utilisé par le réseau de communication reliant l'ordinateur à l'équipement comprenant les cartes d'entrée/sortie ainsi que les caractéristiques de communication propres au bus industriel mis en oeuvre dans l'équipement comprenant la carte d'entrée/sortie.

Par conséquent, lorsqu'un équipement est changé par un autre, utilisant des caractéristiques de communication différentes, il est nécessaire d'adapter les outils de test, ou les interfaces réseau utilisées dans les ordinateurs, en conséquence.

Il existe donc un besoin de définition d'une stratégie de communication rendant le protocole utilisé dans le réseau de communication indépendant de l'architecture matérielle des équipements utilisés.

La demande de brevet EP 1 758 005 décrit un adaptateur réseau permettant de connecter un dispositif de terrain à un réseau. Une adresse réseau est assignée au système comprenant l'adaptateur réseau et le dispositif de terrain qui peut ainsi être accédé via le réseau.

Les demandes de brevet US 2006/112186 et US 2006/109845 décrivent un procédé de communication entre des éléments de deux domaines distincts de type VME et RapidIO via un réseau de communication de type IP. A ces fins, une adresse IP est assignée à chaque domaine qui comprend une cartographie des éléments lui appartenant, c'est-à-dire une liste des adresses VME ou RapidIO de ces éléments. Un lien entre l'adresse IP d'un domaine et les adresses des éléments VME ou RapidIO de ce domaine est mémorisé dans un contrôleur de réseau pour permettre à chaque domaine d'obtenir ces liens et de déterminer une adresse IP en fonction d'une adresse VME ou RapidIO. Pour échanger une donnée entre un premier et un second domaines, la donnée est codée avec l'adresse de destination VME ou RapidIO dans les données utiles d'un paquet IP comprenant comme adresse de destination l'adresse IP du domaine comprenant l'élément de destination.

L'invention permet de résoudre au moins un des problèmes exposés précédemment.

L'invention a ainsi pour objet un procédé selon la revendication 1.

L'invention a également pour objet un programme d'ordinateur selon la revendication 4.

L'invention a aussi pour objet un dispositif d'échange de données selon la revendication 5.

Le dispositif selon l'invention permet ainsi à un ordinateur relié au réseau de communication d'identifier la carte d'extension de laquelle il reçoit des données indépendamment du protocole de communication mis en oeuvre entre la carte d'extension et l'interface réseau de l'équipement. Le changement du protocole de communication mis en oeuvre entre la carte d'extension et l'interface réseau de l'équipement n'affecte donc pas les applications exécutées par les ordinateurs reliés au réseau de communication.

Selon un mode de réalisation particulier, lesdits moyens de configuration comprennent des moyens adaptés à créer au moins un alias correspondant à ladite adresse réseau virtuelle de ladite au moins une carte d'extension dudit équipement. Le dispositif selon l'invention peut ainsi être facilement mis en oeuvre dans des équipements standard.

D'autres avantages, buts et caractéristiques de la présente invention ressortent de la description détaillée qui suit, faite à titre d'exemple non limitatif, au regard des dessins annexés dans lesquels :
- la figure 1 représente un exemple d'environnement pouvant être utilisé pour simuler l'intégration de composants dans un aéronef ;
- la figure 2 illustre un exemple d'équipement comprenant une unité de calcul et une pluralité de cartes d'entrée/sortie, adapté à mettre en oeuvre l'invention ;
- la figure 3 illustre un exemple d'algorithme pouvant être utilisé dans une unité de calcul reliée à un réseau de communication pour permettre l'échange de données entre un système relié à ce réseau de communication et des cartes d'entrée/sortie reliées à l'unité de calcul via un bus industriel ;
- la figure 4 représente schématiquement un exemple de message transmis sous forme de trame IP ; et,
- la figure 5 illustre un exemple de dispositif adapté à mettre en oeuvre l'invention ou une partie de l'invention.

De façon générale, l'invention vise à considérer chaque carte d'extension de type entrée/sortie d'un équipement comprenant une unité de calcul et une pluralité de cartes d'extension comme un dispositif indépendant du réseau de communication auquel sont reliés les ordinateurs utilisés pour simuler l'intégration des composants reliés aux cartes d'extension. Ainsi, il est considéré que chaque carte d'extension dispose virtuellement de sa propre adresse réseau, par exemple, une adresse IP (sigle d'*Internet Protocol* en terminologie anglo-saxonne) permettant une communication de type point à point, aussi appelée adresse unicast.

De plus, l'assignation d'une adresse réseau virtuelle à chaque carte d'extension permet l'adressage de ces cartes par groupe (constitué d'éléments réels ou virtuels) selon un mode de communication appelé multicast.

Selon un mode de réalisation particulier, un élément de calcul est utilisé comme interface entre le réseau et les cartes d'extension. Cet élément permet de recevoir les messages à destination des cartes d'extension, selon le protocole réseau et les adresses réseau virtuelles des cartes, afin de les retransmettre aux cartes d'extension selon les caractéristiques de communication spécifiques au lien établi entre l'élément de calcul et les cartes d'extension.

Ainsi, l'accès aux cartes d'extension à partir d'un système connecté au réseau de communication est réalisé comme si ces cartes d'extension étaient directement reliées au réseau de communication.

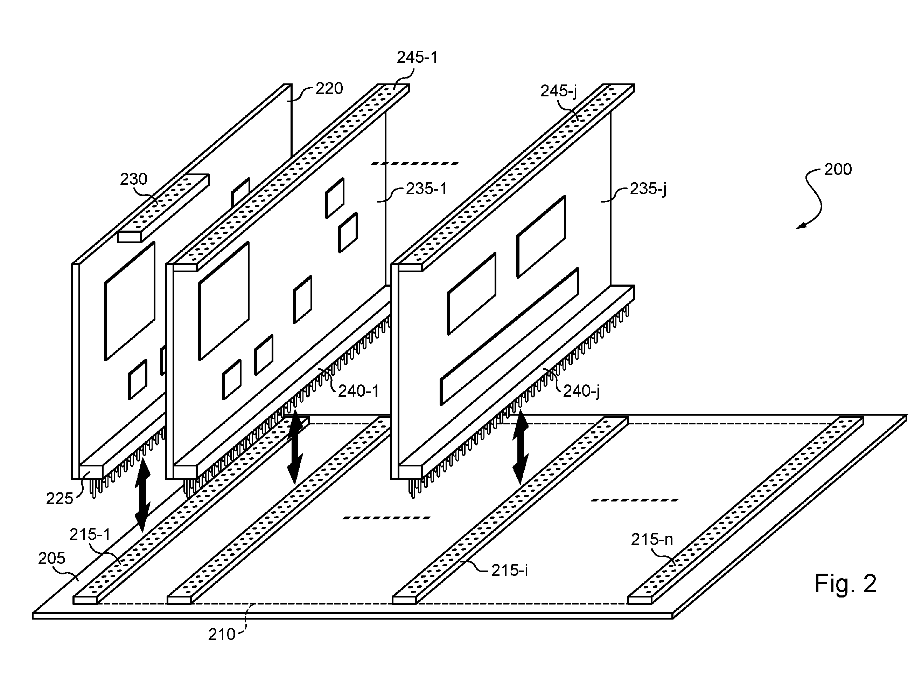

La figure 2 illustre un exemple d'équipement comprenant une unité de calcul et une pluralité de cartes d'extension de type entrée/sortie, adapté à mettre en oeuvre l'invention. L'équipement 200 comprend ici une carte 205 de type PCB (sigle de *Printed Circuit Board* en terminologie anglo-saxonne), aussi appelée *backplane* en terminologie anglo-saxonne, comprenant un bus industriel 210, par exemple un bus VME, auquel sont reliés des connecteurs 215-1 à 215-n.

Les connecteurs 215-1 à 215-n sont adaptés à recevoir des cartes d'extension de différentes natures, compatibles avec le bus industriel 210. En particulier, les connecteurs 215-1 à 215-n sont adaptés à recevoir une carte 220 comprenant une unité de calcul et une interface réseau. La carte 220 comprend un connecteur 225 adapté à coopérer avec l'un des connecteurs 215-1 à 215-n ainsi qu'un connecteur 230 adapté à relier la carte 220 à un réseau de communication.

De même, les connecteurs 215-1 à 215-n sont adaptés à recevoir des cartes d'entrée/sortie 235-1 à 235-j. Chaque carte d'entrée/sortie comprend ici un connecteur adapté à connecter la carte au *backplane* 205 via l'un de ces connecteurs, par exemple les connecteurs 240-1 et 240-j, ainsi qu'un ou plusieurs connecteurs d'entrée/sortie permettant de relier la carte à des composants utilisés pour la simulation, par exemple les connecteurs 245-1 et 245-j.

Dans un tel équipement, un système d'adressage spécifique est mis en oeuvre de façon matérielle ou de façon logicielle. Par exemple, l'adresse d'une carte peut être définie en utilisant un ensemble de commutateurs de type DIP (acronyme de *Dual Inline Package* en terminologie anglo-saxonne) intégrés à la carte. Alternativement, l'adresse peut être prédéterminée en fonction de la position des connecteurs du *backplane* ou définie de façon logicielle à l'initialisation de l'équipement.

Un tel adressage, généralement spécifique au bus industriel utilisé, permet à une carte de transmettre ou de recevoir des données à destination ou en provenance d'une carte particulière. De façon générale, la communication sur un tel bus est initialisée par une carte spécifique, appelée *master* en terminologie anglo-saxonne, qui orchestre la communication entre les autres cartes

L'unité de calcul est ici utilisée, en particulier, pour convertir une telle adresse en adresse réseau, par exemple une adresse IP, et réciproquement.

Dans la version 4, les adresses IP, appelées IPv4, sont généralement définies avec quatre nombres compris entre 0 et 255, séparés par des points. Ainsi, selon un format préféré, l'adresse IP virtuelle de chaque carte d'entrée/sortie appartenant à un équipement donné est de la forme suivante,
*<A>.<B>.<référence de l'équipement>.<référence de la carte>*
où *A* et *B* sont déterminés par spécification et définissent un réseau privé de classe B, « *référence de l'équipement* » est un nombre compris entre 0 et 255 désignant un équipement spécifique et « *référence de la carte* » est un nombre entre 2 et 254 désignant une carte d'entrée/sortie particulière dans l'équipement considéré, avantageusement la position de la carte sur le bus industriel reliant l'unité de calcul et les cartes d'entrée/sortie.

Ainsi, à titre d'illustration, l'adresse 128.203.15.10 désigne la carte d'entrée/sortie ayant la référence 10 dans l'équipement ayant la référence 15 dans le réseau défini par l'adresse réseau 128.203.

L'unité de calcul de chaque équipement configure, de préférence, son adresse IP unicast en fonction de sa localisation géographique sur le bus le reliant aux cartes d'entrée/sortie. L'unité de calcul, ou CPU, étant considérée comme le point d'entrée de l'équipement ou élément de tête, elle possède avantageusement la première adresse sur le bus industriel, soit l'adresse IP unicast suivante,
*<A>.<B>.<référence de l'équipement>.* 1

L'unité de calcul est avantageusement utilisée comme relais pour masquer le bus industriel la reliant aux cartes d'entrée/sortie auxquelles elle est connectée. Ainsi, les messages émis et reçus par les ordinateurs sur le réseau de communication sont sémantiquement définis comme si les cartes d'entrée/sortie étaient directement reliées au réseau de communication.

Par ailleurs, l'unité de calcul configure son interface réseau pour créer autant d'adresses IP unicast qu'il y a de cartes d'entrée/sortie reliées au bus industriel auquel elle est connectée. Ainsi, une adresse IP unicast de type *<A>.<B>.<référence de l'équipement>.<k>* est créée pour chaque carte d'entrée/sortie reliée à l'adresse *k*, ou *slot k* en terminologie anglo-saxonne.

Cependant, alors qu'une adresse IPv4 permet d'identifier de façon unique chaque machine d'un réseau de communication, l'unité de calcul met en oeuvre un mécanisme appelé *IP aliasing* en terminologie anglo-saxonne pour affecter plusieurs adresses IP unicast à une seule interface réseau. Les adresses réseau virtuelles des cartes d'entrée/sortie sont ainsi affectées à l'unité de calcul sous forme d'alias. Ainsi, l'unité de calcul dont l'adresse IP unicast est *A.B.ref_equipement.1* reçoit tous les messages à destination des cartes d'entrée/sortie connectées au même bus industriel que cet équipement, c'est-à-dire tous les messages destinés aux adresses *A.B.ref_equipement.i* préalablement configurées.

L'unité de calcul est alors en charge de transmettre ces messages, sur le bus industriel, aux cartes d'entrée/sortie à qui les messages sont destinés selon des caractéristiques de communication préalablement définies par ailleurs (spécifications du protocole de communication), mises en oeuvre dans l'unité de calcul.

De façon similaire, l'unité de calcul doit recevoir les données des cartes d'entrée/sortie sur le bus industriel auquel elle est reliée pour émettre des messages via son interface réseau. Les données reçues des cartes sont encapsulées sous forme de messages selon le protocole du réseau de communication, l'adresse source de ces messages étant l'adresse IP unicast de la carte d'entrée/sortie à l'origine de ces données, telle que configurée dans l'unité de calcul.

Il convient de remarquer ici que si l'exemple décrit à des fins d'illustration est basé sur IPv4, l'invention peut être mise en oeuvre de façon similaire avec d'autres types de mode d'adressage, par exemple avec IPv6 où deux octets peuvent être utilisés pour référencer les équipements et les cartes, les autres octets étant figés par spécification pour définir un réseau.

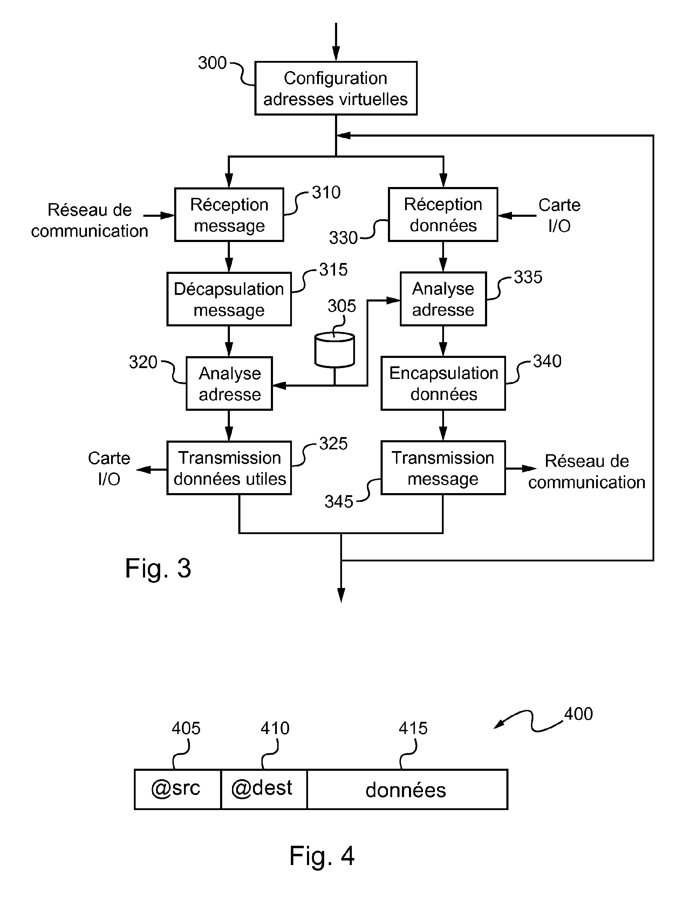

La figure 3 illustre un exemple d'algorithme pouvant être utilisé dans une unité de calcul reliée à un réseau de communication pour permettre l'échange de données entre un système relié à ce réseau de communication et des cartes d'entrée/sortie reliées à l'unité de calcul via un bus industriel.

Une première étape a pour objet de configurer l'équipement comprenant l'unité de calcul (étape 300). Cette étape vise notamment à établir un lien entre les adresses réseau virtuelles des cartes d'entrée/sortie et les adresses réelles de ces cartes sur le bus industriel. Ces liens peuvent être mémorisés dans la base de données 305, par exemple sous forme de tableau dans lequel chaque ligne représente une carte d'entrée/sortie, les valeurs d'une première colonne correspondant aux adresses réseau virtuelles et les valeurs d'une seconde colonne correspondant aux adresses réelles sur le bus industriel.

Il convient de rappeler ici que les adresses réseau virtuelles et/ou les adresses réelles sur le bus industriel peuvent être prédéterminées ou, au contraire, déterminées dynamiquement lors de l'initialisation de l'équipement. Une telle configuration dynamique est ici réalisée de façon classique.

La configuration des adresses réseau virtuelles a également pour objet de configurer l'unité de calcul en créant des alias de façon à ce qu'elle reçoive tous les messages en provenance du réseau de communication à destination des cartes d'entrée/sortie reliées à cette unité de calcul.

Lorsque l'unité de calcul et les adresses réseau virtuelles des cartes d'entrée/sortie sont configurées, l'unité de calcul est prête à recevoir des messages d'un réseau de communication pour les transférer aux cartes d'entrée/sortie dont les adresses sont spécifiées dans le message sous forme d'adresses réseau et à recevoir des données des cartes d'entrée/sortie pour les transférer vers le réseau de communication.

Après avoir été reçus du réseau de communication (étape 310), les messages sont désencapsulés pour extraire notamment l'adresse réseau virtuelle de destination ainsi que les données utiles (étape 315). L'adresse réseau virtuelle de destination est ensuite analysée pour retrouver l'adresse réelle de la ou les cartes d'entrée/sortie destinataires des données reçues (étape 320). Cette analyse consiste, par exemple, à comparer l'adresse réseau virtuelle à celles contenues dans la base de données 305 pour identifier l'adresse réelle de la ou des cartes d'entrée/sortie correspondantes sur le bus industriel.

Les données utiles sont alors transmises aux cartes d'entrée/sortie dont les adresses réelles sur le bus industriel ont été identifiées à l'étape 325.

De façon similaire, lorsque des données sont reçues d'une carte d'entrée/sortie à destination du réseau de communication (étape 330), l'adresse réelle de la carte sur le bus industriel est analysée pour retrouver l'adresse réseau virtuelle correspondante (étape 335). Cette analyse est ici réalisée à l'aide de la base de données 305.

Les données sont alors encapsulées dans un message, par exemple une trame UDP, comprenant une référence à l'adresse source du message, ici l'adresse réseau virtuelle de la carte d'entrée/sortie de laquelle les données sont reçues (étape 340), puis transmises au réseau de communication (étape 345). L'adresse réseau du destinataire du message est déterminée par l'unité de calcul ou la carte d'entrée/sortie. Elle peut ainsi être transmise à l'unité de calcul avec les données ou de façon parallèle.

Comme illustré, le processus est répété pour chaque message et/ou donnée reçus.

La figure 4 représente schématiquement un exemple de message transmis sous forme de trame IP. La trame IP 400 comprend en particulier une adresse IP source 405, c'est-à-dire l'adresse IP du système ayant émis le message, une adresse IP destination 410, c'est-à-dire l'adresse IP du système à qui le message est destiné et les données 415 à transmettre.

Ainsi, lorsque la trame 400 représente un message transmis à une carte d'entrée/sortie, l'adresse IP 410 représente l'adresse réseau virtuelle de cette carte. Réciproquement, lorsque la trame 400 comprend des données issues d'une carte d'entrée/sortie, l'adresse IP 405 représente l'adresse réseau virtuelle de cette carte.

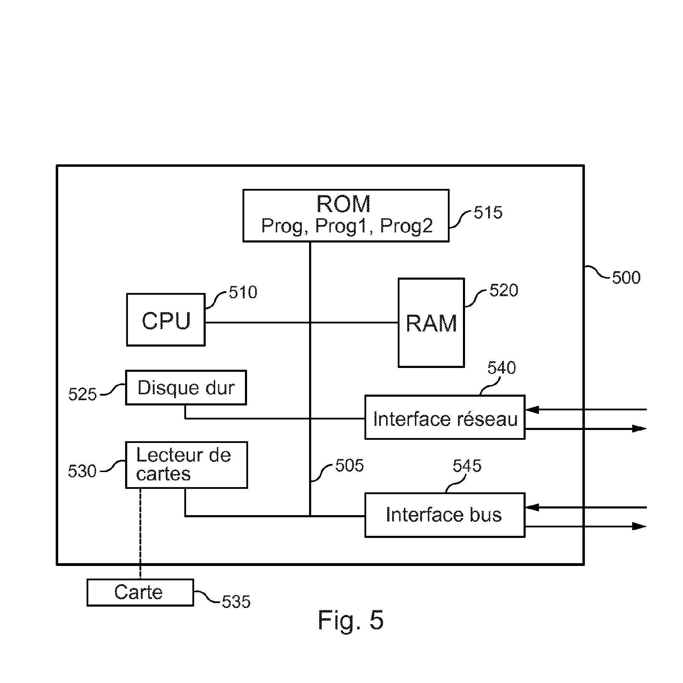

Une unité de calcul adaptée à mettre en oeuvre l'invention ou une partie de l'invention est illustré sur la figure 5.

Le dispositif 500 comporte ici un bus interne de communication 505 auquel sont reliés :
- une unité centrale de traitement ou microprocesseur 510 (CPU, sigle de *Central Processing Unit* en terminologie anglo-saxonne) ;
- une mémoire morte 515 (ROM, acronyme de *Read Only Memory* en terminologie anglo-saxonne) pouvant comporter les programmes nécessaires à la mise en oeuvre de l'invention ;
- une mémoire vive ou mémoire cache 520 (RAM, acronyme de *Random Access Memory* en terminologie anglo-saxonne) comportant des registres adaptés à enregistrer des variables et paramètres créés et modifiés au cours de l'exécution des programmes précités ;
- une première interface de communication 540 adaptée à transmettre et à recevoir des données vers et depuis un réseau de communication, par exemple un réseau de type commuté ;
- une seconde interface de communication 545 adaptée à transmettre et à recevoir des données vers et depuis un bus industriel de communication, par exemple un bus VME.

Le dispositif 500 dispose également, de préférence, des éléments suivants :
- un disque dur 525 pouvant comporter les programmes précités et des données traitées ou à traiter selon l'invention ; et
- un lecteur de cartes mémoires 530 adapté à recevoir une carte mémoire 535 et à y lire ou à y écrire des données traitées ou à traiter selon l'invention.

Le bus interne de communication permet la communication et l'interopérabilité entre les différents éléments inclus dans le dispositif 500 ou reliés à lui. La représentation du bus interne n'est pas limitative et, notamment, l'unité centrale est susceptible de communiquer des instructions à tout élément du dispositif 500 directement ou par l'intermédiaire d'un autre élément du dispositif 500.

Le code exécutable de chaque programme permettant au dispositif programmable de mettre en oeuvre les processus selon l'invention, peut être stocké, par exemple, dans le disque dur 525 ou en mémoire morte 515.

Selon une variante, la carte mémoire 535 peut contenir des données, notamment une table de correspondance entre les événements détectés et les commandes pouvant être sollicitées, ainsi que le code exécutable des programmes précités qui, une fois lu par le dispositif 500, est stocké dans le disque dur 525.

Selon une autre variante, le code exécutable des programmes pourra être reçu, au moins partiellement, par l'intermédiaire de la première interface de communication 540, pour être stocké de façon identique à celle décrite précédemment.

De manière plus générale, le ou les programmes pourront être chargés dans un des moyens de stockage du dispositif 500 avant d'être exécutés.

L'unité centrale 510 va commander et diriger l'exécution des instructions ou portions de code logiciel du ou des programmes selon l'invention, instructions qui sont stockées dans le disque dur 525 ou dans la mémoire morte 515 ou bien dans les autres éléments de stockage précités. Lors de la mise sous tension, le ou les programmes qui sont stockés dans une mémoire non volatile, par exemple le disque dur 525 ou la mémoire morte 515, sont transférés dans la mémoire vive 520 qui contient alors le code exécutable du ou des programmes selon l'invention, ainsi que des registres pour mémoriser les variables et paramètres nécessaires à la mise en oeuvre de l'invention.

L'appareil de communication comportant le dispositif selon l'invention peut également être un appareil programmé. Cet appareil contient alors le code du ou des programmes informatiques par exemple figé dans un circuit intégré à application spécifique, aussi appelé ASIC (acronyme d'*Application-Specific Integrated Circuit* en terminologie anglo-saxonne).

Naturellement, pour satisfaire des besoins spécifiques, une personne compétente dans le domaine de l'invention pourra appliquer des modifications dans la description précédente.

## Revendications

1. Procédé pour échanger des données entre un ordinateur (110) et des cartes d'extension (235) d'un équipement (115) comprenant une interface réseau (220), ledit équipement étant adapté à recevoir une pluralité de cartes d'extension, ledit ordinateur et ladite interface réseau étant reliés par un réseau de communication (105), ledit équipement comprenant un bus industriel (210) auquel sont reliées ladite interface réseau et lesdites cartes d'extension, le procédé étant **caractérisé en ce qu'**il comprend les étapes suivantes,
- attribution à chacune desdites cartes d'extension d'une adresse réseau virtuelle propre dans ledit réseau de communication ; et,
- configuration (300) de ladite interface réseau avec lesdites adresses réseau virtuelles en créant des alias pour permettre à ladite interface réseau de recevoir tous les messages en provenance du réseau de communication à destination desdites cartes et d'identifier ladite interface réseau dans ledit réseau de communication comme représentant chacune desdites cartes d'extension, chaque alias correspondant à l'adresse réseau virtuelle associée à une desdites cartes d'extension dudit équipement, et étant une adresse de type IP dont un premier élément fait référence audit équipement et un second élément fait référence à ladite interface réseau ou à ladite carte d'extension.

2. Procédé selon la revendication 1 comprenant en outre les étapes suivantes,
- réception (310) par ladite interface réseau d'au moins un message, ledit au moins un message comprenant au moins une donnée et au moins une adresse réseau virtuelle correspondant à au moins une carte d'extension dudit équipement ;
- analyse (320) de ladite au moins une adresse réseau virtuelle reçue pour identifier au moins une carte d'extension dudit équipement correspondant à ladite au moins une adresse réseau virtuelle reçue ; et,
- en réponse à ladite étape d'analyse, transmission (325), via ledit bus industriel, de ladite au moins une donnée reçue dans ledit au moins un message à ladite au moins une carte d'extension identifiée correspondant à ladite au moins une adresse réseau virtuelle reçue.

3. Procédé selon la revendication 1 ou la revendication 2 comprenant en outre les étapes suivantes,
- réception (330) d'au moins une donnée de ladite au moins une carte d'extension dudit équipement via ledit bus industriel ;
- encapsulation (340) dans un message de ladite au moins une donnée reçue de ladite au moins une carte d'extension avec l'adresse réseau virtuelle qui lui est associée ; et,
- transmission (345) dudit message audit réseau de communication.

4. Programme d'ordinateur comprenant des instructions adaptées à la mise en oeuvre de chacune des étapes du procédé selon l'une quelconque des revendications précédentes lorsque ledit programme est exécuté sur un ordinateur.

5. Dispositif d'échange de données entre un ordinateur (110) relié à un réseau de communication (105) et des cartes d'extension (235) d'un équipement (115), ledit équipement étant adapté à recevoir une pluralité de cartes d'extension, ledit équipement comprenant un bus industriel (210) auquel sont reliées lesdites cartes d'extension, le dispositif étant **caractérisé en ce qu'**il comprend les moyens suivants,
- moyens de connexion (540) audit réseau de communication ;
- moyens de connexion (545) audit bus industriel ;
- moyens d'attribution d'une adresse réseau virtuelle propre dans ledit réseau de communication à chacune desdites cartes d'extension ; et,
- moyens de configuration desdits moyens de connexion audit réseau de communication avec lesdites adresses réseau virtuelles en créant des alias pour permettre auxdits moyens de connexion de recevoir tous les messages en provenance du réseau de communication à destination desdites cartes et de les identifier dans ledit réseau de communication comme représentant lesdites cartes d'extension , chaque alias correspondant à l'adresse réseau virtuelle associée à une desdites cartes d'extension dudit équipement, et étant une adresse de type IP dont un premier élément fait référence audit équipement et un second élément fait référence à ladite interface réseau ou à ladite carte d'extension.

6. Dispositif selon la revendication 5 comprenant en outre les moyens suivants,
- moyens de réception d'au moins un message via lesdits moyens de connexion audit réseau de communication, ledit message comprenant au moins une donnée et au moins une adresse réseau virtuelle correspondant à au moins une carte d'extension dudit équipement ;
- moyens d'analyse de ladite au moins une adresse virtuelle reçue pour identifier au moins une carte d'extension dudit équipement correspondant à ladite au moins une adresse réseau virtuelle reçue ; et,
- moyens de transmission de ladite au moins une donnée reçue à ladite au moins une carte d'extension identifiée correspondant à ladite au moins une adresse réseau virtuelle reçue via lesdits moyens de connexion audit bus industriel.

7. Dispositif selon la revendication 5 ou la revendication 6 comprenant en outre les moyens suivants,
- moyens de réception d'au moins une donnée d'au moins une carte d'extension dudit équipement via lesdits moyens de connexion audit bus industriel ;
- moyens d'encapsulation, dans un message, de ladite au moins une donnée reçue d'une carte d'extension et de l'adresse réseau virtuelle qui lui est associée ; et,
- moyens de transmission dudit message audit réseau de communication via lesdits moyens de connexion audit réseau de communication.

## Patentansprüche

1. Verfahren zum Austausch von Daten zwischen einem Computer (110) und Erweiterungskarten (235) einer Ausrüstung (115), umfassend eine Netzschnittstelle (220), wobei die Ausrüstung dazu vorgesehen ist, eine Vielzahl von Erweiterungskarten aufzunehmen, wobei der Computer und die Netzschnittstelle durch ein Kommunikationsnetz (105) verbunden sind, wobei die Ausrüstung einen industriellen Datenbus (210) umfasst, mit dem die Netzschnittstelle und die Erweiterungskarten verbunden sind, wobei das Verfahren **dadurch gekennzeichnet ist, dass** es die folgenden Schritte umfasst:
- Zuteilung einer eigenen virtuellen Netzadresse in dem Kommunikationsnetz zu jeder der Erweiterungskarten; und
- Konfiguration (300) der Netzschnittstelle mit den virtuellen Netzadressen, wobei Alias erzeugt werden, um es der Netzschnittstelle zu ermöglichen, alle Meldungen vom Kommunikationsnetz in Richtung der Karten zu empfangen und die Netzschnittstelle in dem Kommunikationsnetz als jede der Erweiterungskarten darstellend zu identifizieren, wobei jedes Alias der virtuellen Netzadresse entspricht, die einer der Erweiterungskarten der Ausrüstung zugeteilt wurde, und wobei es eine Adresse des Typs IP ist, deren erstes Element sich auf die Ausrüstung bezieht, wobei sich ein zweites Element auf die Netzschnittstelle oder die Erweiterungskarte bezieht.

2. Verfahren nach Anspruch 1, ferner umfassend die folgenden Schritte:
- durch die Netzschnittstelle Empfang (310) mindestens einer Meldung, wobei die mindestens eine Meldung mindestens ein Datum und mindestens eine virtuelle Netzadresse entsprechend mindestens einer Erweiterungskarte der Ausrüstung umfasst;
- Analyse (320) der mindestens einen virtuellen Netzadresse, um mindestens eine Erweiterungskarte der Ausrüstung entsprechend der mindestens einen empfangenen virtuellen Netzadresse zu identifizieren; und
- als Antwort auf den Analyseschritt Übertragung (325) des mindestens einen empfangenen Datums in der mindestens einen Meldung durch den industriellen Datenbus an die mindestens eine identifizierte Erweiterungskarte entsprechend der mindestens einen empfangenen virtuellen Netzadresse.

3. Verfahren nach Anspruch 1 oder Anspruch 2, ferner umfassend die folgenden Schritte:
- Empfang (330) des mindestens einen Datums der mindestens einen Erweiterungskarte der Ausrüstung über den industriellen Datenbus;
- Einkapseln (340) des mindestens einen empfangenen Datums der mindestens einen Erweiterungskarte in einer Meldung mit der ihr zugeteilten virtuellen Netzadresse; und
- Übertragung (345) der Meldung an das Kommunikationsnetz.

4. Computerprogramm, umfassend Befehle, die an den Einsatz jedes der Schritte des Verfahrens nach einem der vorhergehenden Ansprüche angepasst sind, wenn das Programm auf einem Computer ausgeführt wird.

5. Vorrichtung zum Datenaustausch zwischen einem Computer (110), der mit einem Kommunikationsnetz (105) verbunden ist, und Erweiterungskarten (235) einer Ausrüstung (115), wobei die Ausrüstung dazu vorgesehen ist, eine Vielzahl von Erweiterungskarten zu empfangen, wobei die Ausrüstung einen industriellen Datenbus (210) umfasst, mit dem die Erweiterungskarten verbunden sind, wobei die Vorrichtung **dadurch gekennzeichnet ist, dass** sie die folgenden Mittel umfasst:
- Anschlussmittel (540) an das Kommunikationsnetz;
- Anschlussmittel (545) an den industriellen Datenbus;
- Mittel zur Zuteilung einer eigenen virtuellen Netzadresse in dem Kommunikationsnetz zu jeder der Erweiterungskarten; und
- Mittel zur Konfiguration der Anschlussmittel an das Kommunikationsnetz mit den virtuellen Netzadressen, wobei Alias erzeugt werden, um es den Anschlussmitteln zu ermöglichen, alle Meldungen von dem Kommunikationsnetz in Richtung der Karten zu empfangen und sie in dem Kommunikationsnetz als die Erweiterungskarten darstellend zu identifizieren, wobei jedes Alias der einer der Erweiterungskarten der Ausrüstung zugeordneten virtuellen Netzadresse entspricht und eine Adresse des Typs IP ist, deren erstes Element sich auf die Ausrüstung bezieht, wobei sich ein zweites Element auf die Netzschnittstelle oder die Erweiterungskarte bezieht.

6. Vorrichtung nach Anspruch 5, ferner umfassend die folgenden Mittel:
- Mittel zum Empfang mindestens einer Meldung über die Anschlussmittel an das Kommunikationsnetz, wobei die Meldung mindestens ein Datum und mindestens eine virtuelle Netzadresse entsprechend der mindestens einen Erweiterungskarte der Ausrüstung umfasst;
- Mittel zur Analyse der mindestens einen empfangenen virtuellen Adresse, um mindestens eine Erweiterungskarte der Ausrüstung entsprechend der mindestens einen empfangenen virtuellen Netzadresse zu identifizieren; und
- Mittel zur Übertragung des mindestens einen empfangenen Datums an mindestens eine identifizierte Erweiterungskarte entsprechend der mindestens einen virtuellen Netzadresse, die über die Anschlussmittel an den industriellen Datenbus empfangen wurde.

7. Vorrichtung nach Anspruch 5 oder Anspruch 6, ferner umfassend die folgenden Mittel:
- Mittel zum Empfang mindestens eines Datums mindestens einer Erweiterungskarte der Ausrüstung über die Anschlussmittel an den industriellen Datenbus;
- Mittel zum Einkapseln des mindestens einen empfangenen Datums einer Erweiterungskarte und der ihr zugeordneten virtuellen Netzadresse in einer Meldung; und
- Mittel zur Übertragung der Meldung an das Kommunikationsnetz über die Anschlussmittel an das Kommunikationsnetz.

## Claims

1. Method for exchanging data between a computer (110) and expansion cards (235) of an equipment item (115) comprising a network interface (220), the said equipment item being adapted for accommodating a plurality of expansion cards, the said computer and the said network interface being connected by a communication network (105), the said equipment item comprising an industrial bus (210) to which the said network interface and the said at least one expansion card are connected, the method being **characterized in that** it comprises the following steps,
- assigning to each of the said expansion cards an individual virtual network address in the said communication network; and
- configuring (300) the said network interface with the said virtual network addresses by creating aliases to make it possible for said network interface to receive all the messages originating from the communication network destined for said cards and to identify the said network interface in the said communication network as representing each of the said cards, each alias corresponding to the virtual network address associated with one of the said expansion cards of the said equipment, and being an address of IP type of which a first element makes reference to the said equipment and a second element makes reference to the said network interface or to the said expansion card.

2. Method according to claim 1 further comprising the following steps,
- receiving (310) by the said network interface of at least one message, the said at least one message comprising at least one datum and at least one virtual network address corresponding to at least one expansion card of the said equipment item;
- analyzing (320) the said at least one virtual network address received in order to identify at least one expansion card of the said equipment item corresponding to the said at least one virtual network address received; and,
- in response to the said analysis step, transmitting (320), via the said industrial bus, the said at least one datum received in the said at least one message to the said at least one expansion card identified corresponding to the said at least one virtual network address received.

3. Method according to claim 1 or claim 2, further comprising the following steps,
- receiving (330) at least one datum from the said at least one expansion card of the said equipment item via the said industrial bus;
- encapsulating (340) in a message the said at least one datum received from the said at least one expansion card with the virtual network address that is associated therewith; and,
- transmitting (345) the said message to the said communication network.

4. Computer program comprising instructions adapted for the implementation of each of the steps of the method according to any one of the preceding claims when the said program is executed on a computer.

5. Device for exchange of data between a computer (110) connected to a communication network (105) and expansion cards (235) of an equipment item (115), the said equipment item being adapted for accommodating a plurality of expansion cards, the said equipment item comprising an industrial bus (210) to which the said expansion cards are connected, the device being **characterized in that** it comprises the following means,
- means for connection (540) to the said communication network;
- means for connection (545) to the said industrial bus;
- means for assignment of an individual virtual network address in the said communication network to each of the expansion cards; and,
- means for configuration of the said means for connection to the said communication network with the said virtual network addresses by creating aliases to allow the said means of connection to receive all the messages originating from the communication network destined for the said cards and to identify them in the said communication network as representing the said expansion cards, each alias corresponding to the virtual network address associated with one of the said expansion cards of said equipment, and being an address of IP type of which a first element makes reference to the said equipment and a second element makes reference to the said network interface or to the said expansion card.

6. Device according to claim 5, further comprising the following means,
- means for reception of at least one message via the said means for connection to the said communication network, the said message comprising at least one datum and at least one virtual network address corresponding to at least one expansion card of the said equipment item;
- means for analysis of the said at least one virtual address received in order to identify at least one expansion card of the said equipment item corresponding to the said at least one virtual network address received; and
- means for transmission of the said at least one datum received to the said at least one expansion card identified corresponding to the said at least one virtual network address received via the said means for connection to the said industrial bus.

7. Device according to claim 5 or claim 6, further comprising the following means,
- means for reception of at least one datum from at least one expansion card of the said equipment item via the said means of connection to the said industrial bus;
- means for encapsulation, in a message, of the said at least one datum received from an expansion card and the virtual network address that is associated therewith; and
- means for transmission of the said message to the said communication network via the said means for connection to the said communication network.
